Europäisches Patentamt

European Patent Office

Office européen des brevets

(19)

(11) Veröffentlichungsnummer: **0 253 072**
**A2**

(12) # EUROPÄISCHE PATENTANMELDUNG

(21) Anmeldenummer: **87105770.9**

(22) Anmeldetag: **18.04.87**

(51) Int. Cl.⁴: **F 16 F 9/49**

(30) Priorität: **15.07.86 DE 3623787**

(43) Veröffentlichungstag der Anmeldung: **20.01.88**
Patentblatt **88/3**

(84) Benannte Vertragsstaaten: **AT BE CH DE ES FR GB IT LI NL SE**

(71) Anmelder: **Fritz Bauer + Söhne oHG,
Industriestrasse 12-14, D-8503 Altdorf b. Nürnberg (DE)**

(72) Erfinder: **Bauer, Hans-Peter, Ziegelhütte 9,
D-8503 Altdorf (DE)**
Erfinder: **Bauer, Hans Jürgen, Am Eichenhain 8,
D-8503 Altdorf (DE)**
Erfinder: **Stadelmann, Ludwig, Schopperstrasse 14,
D-8503 Altdorf (DE)**
Erfinder: **Frisch, Emil, Föhrenweg 81, D-8430 Neumarkt
(DE)**

(74) Vertreter: **Rau, Manfred, Dr. Dipl.-Ing. et al, Rau &
Schneck, Patentanwälte Königstrasse 2,
D-8500 Nürnberg 1 (DE)**

(54) · Gasfeder mit Endlagendämpfung.

(57) Eine Gasfeder mit Endlagendämpfung weist ein mit unter Druck stehendem Fluid gefülltes zylindrisches Gehäuse (2) auf, in dem eine aus einem Ende des Gehäuses abgedichtet herausgeführte Kolbenstange (4) koaxial verschiebbar angeordnet ist, an deren innerem Ende ein Kolben (19) angebracht ist.

Um eine in ihrem Aufbau einfach Endlagendämpfung zu schaffen, die sowohl rein pneumatisch, als auch rein hydraulisch, als auch hydropneumatisch wirksam sein kann, ist auf der Kolbenstange (4) verschiebbar ein als Drosselkolben ausgebildeter Zusatzkolben (28) angeordnet, der über einen Kraftspeicher (29) zum kolbenstangenaustrittsseitigen Ende des Gehäuses (2) hin abgestützt ist. Der Kolben (19) kommt am Ende der Ausfahrbewegung der Kolbenstange (4) zur Anlage an diesem Zusatzkolben (28). Dessen Drosselwirkung ist beim Verschieben zum kolbenstangenaustrittsseitigen Ende hin größer als in umgekehrter Richtung.

- *i* -

## Gasfeder mit Endlagendämpfung

--------------------------------------------------------------

Die Erfindung betrifft eine Gasfeder mit Endlagendämpfung nach dem Oberbegriff des Anspruches 1.

Bei einer derartigen Gasfeder ist der am freien
Ende der Kolbenstange befindliche Kolben als
Dämpfungskolben ausgebildet, der bei Ausschubbewegungen der Kolbenstange aus dem Gehäuse
dicht schließt. Das Gas fließt hierbei über
einen den Kolben überbrückenden, in der Kolbenstange ausgebildeten Kanal von einer Seite
des Kolbens auf die anderen Seite, wobei dieser
Kanal mittels einer Drosselbohrung mit dem
zugeordneten Innenraum der Gasfeder verbunden
ist. Der Kanal in der Kolbenstange ist so
lang ausgebildet, und die Drosselbohrung ist
in einem solchen Abstand vom Kolben angeordnet,
daß vor Erreichen der Endlage der Kolbenstange mit Kolben die Drosselbohrung in eine am kolbenstangenaustrittsseitigen Ende der Gasfeder
angeordnete Bohrung mit nur geringfügig weiterem
Querschnitt als die Kolbenstange eintritt,
so daß das Gas durch die Drosselbohrung und
den Kanal nur unter zusätzlicher starker Drosselung abströmen kann. Insbesondere wenn die
Gasfeder ausschließlich mit Gas gefüllt ist
oder aber in der weitgehend ausgefahrenen
Stellung der Kolbenstange etwa vorhandenes
Öl nicht mehr in diesem Bereich der Gasfeder
ist, muß die Drosselbohrung sehr klein sein.
Eine solche sehr kleine Drosselbohrung verstopft
sich aber relativ leicht, wenn Partikelchen,
beispielsweise von den vorhandenen Dichtungen,
abgerieben werden. Im übrigen bringen selbst
Bohrungen von nur 0,4 mm Durchmesser, die
produktionstechnisch als kleinstmöglicher
Durchmesser herstellbar sind, auch dann, wenn
sie nicht verstopfen, keine zufriedenstellende
Dämpfung.

Die gattungsgemäßen Gasfedern werden primär
als Hubhilfe für Heckklappen oder Motorhauben
von Kraftfahrzeugen eingesetzt, wobei oft
in der geschlossenen Ruhelage der Klappe bzw.
Haube die Kolbenstangen mit ihrem äußeren
freien Ende nach unten zeigen, während sie
in hochgeklapptem Zustand nach oben gerichtet
sind. Wenn in derartigen Gasfedern Öl zur
Anschlagdämpfung beim Ausfahren der Kolbenstange
vorgesehen ist, dann befindet sich dieses
Öl zumindest nach einem ersten Hochfahren
der Kolbenstange auf der falschen Seite des
an der Kolbenstange angebrachten Kolbens,
ist also nicht in der Lage, die Endlagendämpfung
befriedigend herbeizuführen. Um diese Probleme zu beseitigen, ist aus der DE-PS 24 14 457
bekannt geworden, an der Kolbenstange im Bereich
ihres am inneren Ende angebrachten Kolbens
einen topfförmigen Behälter anzubringen, der
zum kolbenstangenaustrittsseitigen Ende hin
offen ist. Diesem Behälter ist ein Verdrängerkörper zugeordnet, der am kolbenstangenaustrittsseitigen Ende des Gehäuses angebracht ist. Der
Außendurchmesser des Behälters ist geringfügig
kleiner als der Innendurchmesser des Gehäuses.
Wenn das kolbenstangenaustrittsseitige Ende
des Gehäuses beim Hochschwenken einer Heckklappe
eines Kraftfahrzeuges in eine nach oben gerichtete Lage kommt, dann fließt die vorhandene
Dämpfungsflüssigkeit im wesentlichen in den
Behälter und wird von diesem mitgenommen,
bis der Verdrängerkörper in den Behälter eintaucht und die Dämpfungsflüssigkeit herausdrückt.
Diese wird dann durch den Spalt zwischen dem
Behälter und der Innenwand des Gehäuses unter
entsprechender Dämpfung herausgequetscht.
Diese konstruktive Lösung ist sehr aufwendig.
In den meisten in der Praxis vorkommenden
Fällen werden die Gasfedern als Hubhilfen
für Heckklappen bzw. Motorhauben derart eingebaut,
daß in geschlossener Lage der Klappen die
Kolbenstangen mit ihren äußeren freien Enden
nach oben und in geöffnetem Zustand der Klappe
dann nach unten zeigen. Hierbei kann das in
der Gasfeder befindliche Öl zur Anschlagdämpfung
beim Ausfahren der Kolbenstange praktisch
gar nicht eingesetzt werden, wenn keine besonderen
Maßnahmen vorgesehen sind.

Der Erfindung liegt die Aufgabe zugrunde,
eine in ihrem Aufbau einfache Endlagendämpfung
zu schaffen, die sowohl rein pneumatisch,
als auch rein hydraulisch als auch hydropneumatisch wirksam sein kann.

Diese Aufgabe wird erfindungsgemäß durch die Merkmale im Kennzeichnungsteil des Anspruches 1 gelöst.

Durch die erfindungsgemäßen Maßnahmen wird erreicht, daß am Ende der Ausschubbewegung der Kolbenstange, wenn der an der Kolbenstange angebrachte Kolben den Zusatzkolben erreicht, eine der Ausschubbewegung der Kolbenstange entgegenwirkende Dämpfungskraft auf letztere ausgeübt wird. Diese setzt sich zusammen aus der vom Kraftspeicher aufgebrachten Kraft, die der durch den Gasdruck ausgeübten Kraft entgegengerichtet ist und aus der von der Ausschubgeschwindigkeit abhängigen Dämpfungskraft, die beim Strömen des durch Gas und/oder Dämpfungsflüssigkeit gebildeten Fluids durch den Drosselkanal ausgeübt wird.

Durch die Maßnahmen nach Anspruch 2 und Anspruch 3 wird erreicht, daß die durch das Fluid bewirkte Endlagendämpfung genau dimensioniert werden kann, wobei insbesondere die Maßnahme nach Anspruch 4 ein genaues Kalibrieren des Drosselkanals zuläßt. Im Zusammenwirken damit ermöglichen die Maßnahmen nach Anspruch 5, daß beim Wirksamwerden der Endlagendämpfung beim vollständigen Ausfahren der Kolbenstange nur die Dämpfungswirkung in dem Drosselkanal wirksam ist, daß aber die Einschubbewegung der Kolbenstange nicht mehr durch den Zusatzkolben gedämpft wird.

Weitere Einzelheiten der Erfindung ergeben sich aus der nachfolgenden Beschreibung eines Ausführungsbeispiels anhand der Zeichnung. Es zeigt

Fig. 1 eine an einer Heckklappe eines Automobils
montierte Gasfeder nach der Erfindung
in schematischer Darstellung,

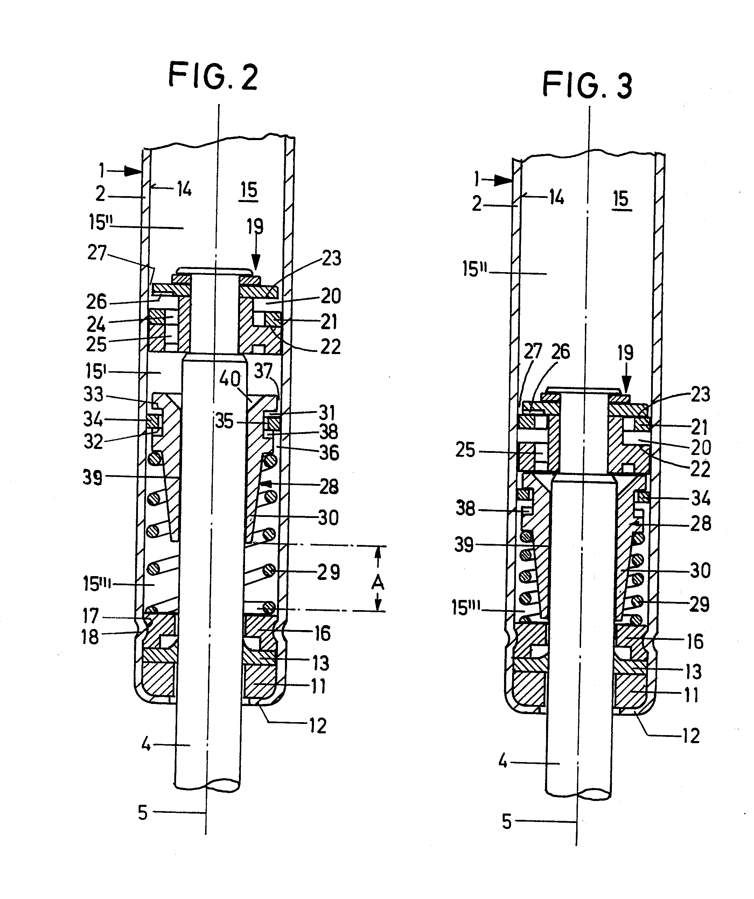

Fig. 2 eine Teildarstellung der Gasfeder nach
der Erfindung im Längsschnitt, wobei
der Dämpfungs-Kolben und der Zusatz-Kolben sich in einer einer Einschubbewegung
der Kolbenstange entsprechenden Stellung
befinden und

Fig. 3 eine Teildarstellung der Gasfeder nach
der Erfindung im Längsschnitt, wobei
unter Anliegen des Dämpfungs-Kolbens
am Zusatz-Kolben bei einer Ausschubbewegung der Kolbenstange eine Endlagendämpfung erzeugt wird.

Eine Gasfeder 1 weist ein etwa zylindrisches
Gehäuse 2 auf, an dessen einem gasdicht geschlossenen Ende eine Gelenköse 3 angebracht ist.

Aus dem anderen Ende des Gehäuses 2 ist eine
Kolbenstange 4 herausgeführt, die konzentrisch
zur Mittel-Längs-Achse 5 des Gehäuses 2 verschiebbar angeordnet ist.

Die Gasfeder 1 ist mit ihrer Gelenköse 3 in
einem Gelenk 6, an einer Heckklappe 7 eines
Kraftfahrzeuges angelenkt.

Das freie Ende der Kolbenstange 4 ist mittels
eines Gelenks 8 am Rahmen 9 des Kraftfahrzeugs angelenkt. Die Heckklappe ihrerseits ist mittels eines Gelenks 1o am Rahmen 9 angebracht. Das Gelenk 1o liegt oberhalb des Gelenks 6 und oberhalb des Gelenks 8.

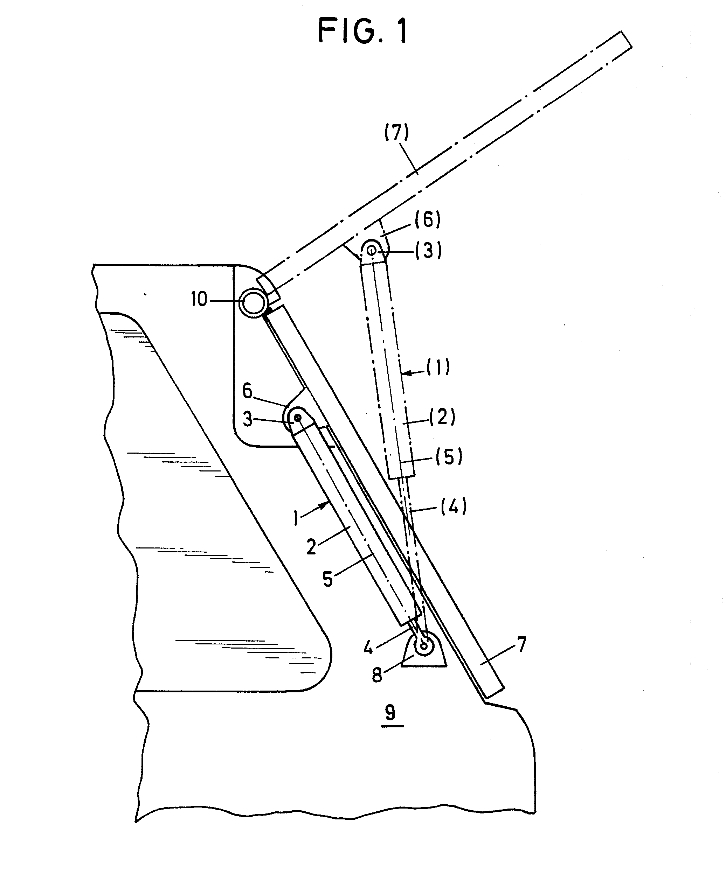

Wie aus Fig. 1 hervorgeht, ist die Kolbenstange 4 bei geschlossener Heckklappe 7 in das Gehäuse 2 eingeschoben. Wenn die Heckklappe 7 geöffnet, d.h. in die in Fig. 1 gestrichelt dargestellte obere Stellung hochgeschwenkt wird, fährt die Kolbenstange 4 aufgrund der durch den Gasdruck im Gehäuse 2 auf die Kolbenstange 4 ausgeübten Ausschubkraft aus dem Gehäuse 2 heraus und drückt die Heckklappe 7 hoch. Dies ist bekannt und allgemein üblich.

Am kolbenstangenaustrittsseitigen Ende des Gehäuses 2 ist eine die Kolbenstange 4 koaxial führende Führungsbüchse 11 angebracht, die axial nach außen durch eine Umbördelung 12 des Gehäuses 2 gehalten wird. Gegen diese Führungsbüchse 11 liegt eine Dichtung 13 an, die einerseits dichtend gegen die Innenwand 14 des Gehäuses 2 und andererseits dichtend gegen die Kolbenstange 4 anliegt, so daß die Gasfeder 1 an ihrem kolbenstangenaustrittsseitigen Ende gasdicht abgeschlossen ist.

Zum Innenraum 15 des Gehäuses 2 hin schließt sich an die Dichtung 13 ein Haltering 16 an, der durch eine in das Gehäuse 2 eingerollte, in eine entsprechende Umfangsnut 17 des Halterings 16 eingreifende Sicke 18 axial gehalten wird.

An dem im Gehäuse 2 befindlichen Ende der Kolbenstange 4 ist ein sogenannter Dämpfungs-Kolben 19 angebracht, der einen zur Innenwand 14 des Gehäuses 2 hin offenen Ringraum 2o aufweist, in dem ein an der Innenwand 14 anliegender Dämpfungsring 21 angeordnet ist. Der Ringraum 2o weist zwei als Anschlagflächen 22, 23 dienende axiale Begrenzungsflächen auf, deren Abstand etwas größer ist als die axiale Erstreckung des Dämpfungsrings 21, so daß sich dieser zwischen ihnen axial geringfügig relativ zum Kolben 19 verschieben kann.

Radial innerhalb des Dämpfungsrings 21 ist im Ringraum 2o ein Freiraum 24 ausgebildet, in den ein Durchlaßkanal 25 einmündet. Dieser Durchlaßkanal 25 mündet an seinem anderen Ende in den Teil-Innenraum 15' ein, der sich zwischen dem Dämpfungs-Kolben 19 und dem kolbenstangenaustrittsseitigen Ende der Gasfeder befindet.

In der dem Durchlaßkanal 25 axial gegenüberliegenden Anschlagfläche 23 ist ein sich im wesentlichen radial erstreckender Durchlaßkanal 26 ausgebildet, der in einem Ringspalt 27 zwischen dem Kolben 19 und der Innenwand 14 des Gehäuses 2 endet. Hierüber kann der Ringraum 2o im Kolben 19 mit dem Teil-Innenraum 15" verbunden werden, der zwischen dem Kolben 19 und dem geschlossenen Ende des Gehäuses 2 der Gasfeder 1 ausgebildet ist. Die radiale Erstreckung des Durchlaßkanals 26 ist größer als die des Dämpfungsrings 21, so daß dieser Durchlaßkanal auch in den Freiraum 24 einmündet. Der Querschnitt des Ringspaltes 27 ist erheblich größer als der des Durchlaßkanals 26, so daß dann, wenn der Dämpfungsring 21 gegen die Anschlagfläche 23 anliegt, was beim Ausfahren der Kolbenstange 4 aus dem Gehäuse 2 der Fall ist, Gas und/oder Flüssigkeit aus dem Teil-Innenraum 15' durch den Durchlaßkanal 25, den Freiraum 24, den Durchlaßkanal 26 und den Ringspalt 27 in den Teil-Innenraum 15" strömen kann. Im Durchlaßkanal 26 erfolgt dabei eine hohe Dämpfung, d.h. die Ausfahrbewegung der Kolbenstange 4 aus dem Gehäuse 2 ist stark gedämpft. Wenn dagegen - was beim Einschieben der Kolbenstange 4 in das Gehäuse 2 der Fall ist - der Dämpfungsring 21 gegen Anschlagfläche 22 anliegt, dann kann das Gas und/oder die Dämpfungs-Flüssigkeit über den vollen Querschnitt des Ringspaltes 27 in den Freiraum 24 und von dort ebenfalls ungedrosselt durch den Durchlaßkanal 25 in den Teil-Innenraum 15' strömen. Die Einschubbewegung der Kolbenstange ist also weitgehend ungedämpft. Sie erfolgt lediglich gegen die Kraft, die von dem im Innenraum 15 des Gehäuses 2 befindlichen Druckgas auf die Kolbenstange 4 ausgeübt wird. Außer der Druckgasfüllung kann eine zusätzliche, den Innenraum 15 nur teilweise füllende Flüssigkeitsmenge vorgesehen sein, bei der es sich entweder um eine reine Schmierölfüllung von einigen wenigen Kubikzentimetern oder um eine Dämpfungs-Flüssigkeit handelt. Druckgas und/oder Dämpfungs-Flüssigkeit werden als Fluid bezeichnet.

Auf der Kolbenstange 4 ist ein Zusatzkolben 28 axial verschiebbar angeordnet. Er ist über eine Schrauben-Feder 29 gegen den Haltering 16 abgestützt. Der Zusatzkolben 28 weist zur Erzielung einer verkantungsfreien Führung auf der Kolbenstange 4, also zur Erzielung einer ausreichenden Führungslänge eine Führungshülse 3o auf, die sich innerhalb der Schrauben-Feder 29 befindet und die etwas kürzer ist, als die Schrauben-Feder 29 in völlig zusammengedrücktem Zustand, so daß die Führungshülse 3o und damit der Zusatzkolben 28 nicht gegen den Haltering 16 anschlagen kann.

Der Zusatzkolben 28 weist in seinem dem Dämpfungs-Kolben 19 zugewandten Bereich eine Ringnut 31 auf, die axial durch zwei Anschlagflächen 32, 33 begrenzt wird. In der Ringnut 31 ist ein Kolbenring 34 angeordnet, der dicht gegen die Innenwand 14 des Gehäuses 2 anliegt und dessen axiale Erstreckung geringer ist als der axiale Abstand der Anschlagflächen 32, 33, so daß er sich relativ zum Zusatzkolben 28 bewegen kann. Radial innerhalb des Kolbenrings 34 ist in der Ringnut 31 ein Freiraum 35 ausgebildet.

Anschließend an die Anschlagflächen 32, 33 sind Ringspalte 36, 37 zwischen der Innenwand 14 des Gehäuses 2 und dem Zusatzkolben 28 vorgesehen. In der dem kolbenstangenaustrittsseitigen Ende der Gasfeder 1 benachbarten Anschlagfläche 32 ist mindestens ein den Kolbenring 34 radial überbrückender Durchlaßkanal 38 ausgebildet, der den benachbarten Ringspalt 36 mit dem Freiraum 35 verbindet. Wenn der Zusatzkolben 28 in Richtung auf das kolbenstangenaustrittsseitige Ende des Gehäuses 2 verschoben wird, dann liegt der Kolbenring 34 dicht gegen die dem Dämpfungs-Kolben 19 benachbarte Anschlagfläche 33 an und verschließt somit den zugeordneten Ringspalt 37 vollständig, so daß hierüber keinerlei Fluid aus dem Teil-Innenraum 15"' zwischen dem Zusatzkolben 28 und dem Haltering 16 in den Teil-Innenraum 15' zwischen Kolben 19 und Zusatzkolben 28 strömen kann. Wenn dagegen der Zusatzkolben 28 in das Gehäuse 2 der Gasfeder 2 hineinbewegt bzw. belastet wird, dann liegt der Kolbenring 34 gegen die andere Anschlagfläche 32 an, so daß durch den Ringspalt 37, den Freiraum 35, den mindestens einen radial Durchlaßkanal 38 und den Ringspalt 36 Fluid aus dem Teil-Innenraum 15' in den Teil-Innenraum 15"' strömen kann.

Der Zusatzkolben 28 samt Führungshülse 3o ist auf der Kolbenstange 4 mit etwas radialem Spiel geführt, d.h. zwischen Zusatzkolben 28 und Kolbenstange 4 erstreckt sich ein ringzylindrischer Drosselkanal 39. Durch diesen Drosselkanal kann bei Bewegungen des Zusatzkolbens 28 zum kolbenstangenaustrittsseitigen Ende des Gehäuses 2 hin, wenn also der Zusatzkolben 28 durch den Kolbenring 34 in der geschilderten Weise völlig geschlossen ist, Fluid aus dem Teil-Innenraum 15"' in den Teil-Innenraum 15' unter entsprechender Drosselung, d.h. Dämpfung der Ausfahrbewegung der Kolbenstange strömen.

Die Wirkungsweise ist wie folgt: Wenn zum Öffnen der Klappe 8 die Kolbenstange 4 durch den Druck des Gases im Gehäuse 2 aus diesem herausgeschoben wird, dann strömt das Fluid, in diesem Falle primär Druckgas in der bereits geschilderten Weise durch den Dämpfungs-Kolben 19 und zwar vom Teil-Innenraum 15' in den Teil-Innenraum 15". Diese Ausschubbewegung ist gedrosselt, d.h. gedämpft. Bevor der Dämpfungs-Kolben 19 den Zusatzkolben 28 erreicht, treten an diesem keinerlei Effekt auf. Kurz vor dem Ende der Ausschubbewegung der Kolbenstange 4 trifft der Kolben 19 auf den Zusatzkolben 28 und drückt diesen in Richtung zum kolbenstangenaustrittsseitigen Ende des Gehäuses 2, wodurch der Zusatzkolben 28 vom Kolbenring 34 verschlossen wird. Von der Schrauben-Feder 29 wird jetzt eine Kraft auf den Zusatzkolben 28 und damit den Dämpfungs-Kolben 19 und damit die Kolbenstange 4 ausgeübt, die der vom Druck des Gases auf die Kolbenstange 4 ausgeübten Ausschubkraft entgegenwirkt. Diese entgegenwirkende Kraft nimmt zu, je weiter die Kolbenstange 4 aus dem Gehäuse 2 ausgefahren, d.h. je mehr die Schrauben-Feder 29 zusammengedrückt wird. Zusätzlich wird eine erhebliche Dämpfungskraft auf den Zusatzkolben 28 und damit die Kolbenstange 4 ausgeübt, da das Fluid aus dem Teil-Innenraum 15"' nur durch den Drosselkanal 39 in den Teil-Innenraum 15' und von dort durch den Dämpfungs-Kolben 19 in den Teil-Innenraum 15" strömen kann. Beim Ausfahren der Kolbenstange 4 wird also durch den Zusatzkolben 28 mit Schrauben-Feder 29 eine ausgeprägte Endlagendämpfung erreicht.

0253072

Der Zusatzkolben 28 weist auf der dem Dämpfungs-Kolben 19 zugewandten Seite eine Trichteröffnung 4o auf, die bei zusammengefahrenen
Zusatzkolben 28 und Dämpfungs-Kolben 19 sicherstellt, daß der Drosselkanal 39 mit dem Durchlaßkanal 25 des Dämpfungs-Kolbens verbunden bleibt.
Die Trichteröffnung 4o und der Durchlaßkanal 25
überlappen sich also zumindest teilweise.
Diese Maßnahme ist notwendig, da der Teil-Innenraum 15' weitgehend oder völlig verschwindet,
wenn der Dämpfungs-Kolben 19 am Zusatzkolben 28
anliegt.

Beim Einfahren der Kolbenstange 4, also beim
Schließen der Klappe 8 wird der Zusatzkolben 28
entlastet und bewegt sich unter dem Druck
der vorgespannten Feder 29 wieder in Richtung
zum geschlossenen Ende des Gehäuses 2, wobei
der Kolbenring 34 den Zusatzkolben 28 nicht
mehr verschließt, wie bereits geschildert
wurde.

Wie sich aus der vorstehenden Schilderung
ergibt, ist die erfindungsgemäße Gasfeder
primär einsetzbar, wenn die Kolbenstange während
aller Betriebszustände vom Kolben 19 her gesehen
zu ihrem freien Ende, also zum Gelenk 9 hin
nach unten geneigt ist, so daß der Zusatzkolben
28 ständig auf jeden Fall unter seinem Eigengewicht gegen die Feder 29 anliegt. Dies ist
gleichermaßen empfehlenswert, wenn nicht nur
Druckgas, sondern auch eine Dämpfungsflüssigkeit eingesetzt wird, wenn also die Dämpfung
der Bewegung des Zusatzkolbens 28 als Endlagendämpfung durch eine Dämpfungsflüssigkeit erreicht
wird. Auf jeden Fall sollte aber die Anwendung
dieser Gasfeder so erfolgen, daß das freie Ende der Kolbenstange, d.h. das Gelenk 9,
sich nur dann oberhalb des Kolbens 19 befindet,
wenn die Kolbenstange 4 so weit aus dem Gehäuse 2
ausgefahren ist, daß der Kolben 19 bereits
am Zusatzkolben 28 anliegt.

Die Endlagendämpfung kann auch zweistufig
ausgebildet sein, wenn nämlich der Teil-Innenraum 15"' nur teilweise mit Dämpfungsflüssigkeit
gefüllt ist. In diesem Fall erfolgt die Endlagendämpfung nach Auftreffen des Kolbens 19 auf
dem Zusatzkolben 28 in der ersten Phase nur
gegen die zunehmende Kraft der Feder 29. Eine
zusätzliche Dämpfung erfolgt dann erst, wenn
der Zusatzkolben 28 so weit zum kolbenstangenaustrittsseitigen Ende des Gehäuses 2 hin verfahren
ist, daß der Teil-Innenraum 15"' vollständig
mit Öl gefüllt ist und dieses durch den Drosselkanal 39 herausgepreßt wird. Diese zweistufige
Endlagendämpfung ist nur möglich, wenn die
Gasfeder in jeder Betriebsstellung so stark
mit ihrem herausragenden Ende der Kolbenstange
4 nach unten geneigt ist, daß die Flüssigkeit
immer in dem Teil-Innenraum 15"' verbleibt,
wenn der Zusatzkolben 28 eine der entlasteten
Feder 29 entsprechende Stellung einnimmt.
In gleicher Weise kann die Dämpfungsflüssigkeit
sich auch noch in dem Teil-Innenraum 15'.
befinden. Bis zum Auftreffen des Dämpfungs-Kolbens 19 auf diese Flüssigkeit strömt nur Gas
mit geringerer Dämpfung durch den Kolben 19.
Die erste Abstufung der Dämpfung erfolgt dann
am Kolben 19.

- 14 -

Der maximale Weg A des Zusatzkolbens 28 bestimmt die Länge der Ausfahrbewegung der Kolbenstange 4, über die die Endlagendämpfung erfolgt.

Die Federcharakteristik der Schrauben-Feder 29 bestimmt die von dieser ausgeübte Gegenkraft und damit die von dieser aufgebrachte Dämpfungskraft. Die Dimensionierung des Drosselkanals 39 bestimmt die zusätzliche hydraulische und/oder pneumatische Dämpfung durch den Zusatzkolben 28.

<u>A n s p r ü c h e</u>

1. Gasfeder mit Endlagendämpfung, mit einem mit unter Druck stehendem Fluid gefüllten zylindrischen Gehäuse (2), in dem eine aus einem Ende des Gehäuses abgedichtet herausgeführte Kolbenstange (4) koaxial verschiebbar angeordnet ist, an deren innerem Ende ein Kolben (Dämpfungs-Kolben 19) angebracht ist, und in dem am kolbenstangenaustrittsseitigen Ende eine Einrichtung zum Dämpfen einer Ausschubbewegung der Kolbenstange (4) am Ende ihrer Ausschubbewegung vorgesehen ist, <u>dadurch gekennzeichnet, daß</u> die Einrichtung zum Dämpfen der Ausschubbewegung der Kolbenstange (4) durch einen auf der Kolbenstange (4) verschiebbar angeordneten, als Drosselkolben ausgebildeten Zusatzkolben (28) und einen diesen gegenüber dem kolbenstangenaustrittsseitigen Ende abstützenden Kraftspeicher (Schrauben-Feder 29) gebildet ist, wobei am Ende einer Ausschubbewegung der Kolbenstange (4) letztere den Zusatzkolben (28) gegen die Kraft des Kraftspeichers (Schrauben-Feder 29) und unter gleichzeitiger Verkleinerung eines Teil-Innenraums (15"') zwischen dem Zusatzkolben (28) und dem kolbenstangenaustrittsseitigen Ende des Gehäuses (2) verschiebt und wobei die Drosselwirkung des Zusatzkolbens (28) bei dieser Ausschubbewegung kleiner ist als beim Einfahren der Kolbenstange (4) in das Gehäuse (2).

2. Gasfeder nach Anspruch 1, dadurch gekennzeichnet, daß der Zusatzkolben (28) mindestens einen ständig geöffneten Drosselkanal (39) aufweist.

3. Gasfeder nach Anspruch 1, dadurch gekennzeichnet, daß der Zusatzkolben (28) mindestens einen bei einer Bewegung des Zusatzkolbens (28) zum kolbenstangenaustrittsseitigen Ende des Gehäuses (2) hin geschlossenen und bei einer Bewegung in umgekehrter Richtung geöffneten Durchlaßkanal (36, 37, 35, 38) aufweist.

4. Gasfeder nach Anspruch 2, dadurch gekennzeichnet, daß der Drosselkanal (39) zwischen der Kolbenstange (4) und dem Zusatzkolben (28) ausgebildet ist.

5. Gasfeder nach Anspruch 3, <u>dadurch gekennzeich-</u>
<u>net, daß</u> am Außenumfang des Zusatzkolbens
(28) eine Ringnut (31) mit einem an der Innenwand (14) des Gehäuses (2) dicht anliegenden
Kolbenring (34) ausgebildet ist, der bei einer
Bewegung des Zusatzkolbens (28) zum kolbenstangenaustrittsseitigen Ende des Gehäuses (2)
hin einen Durchlaßkanal (Ringspalt 37) verschließt.

# FIG. 1

FIG. 2

FIG. 3